# EUROPÄISCHE PATENTSCHRIFT

(11) **EP 2 084 423 B1**
(45) Veröffentlichungstag und Bekanntmachung des Hinweises auf die Patenterteilung: **14.07.2010**
(21) Anmeldenummer: 07821694.2
(22) Anmeldetag: 23.10.2007
(51) Int. Cl.: F16D 65/00

(54) **FILTERANORDNUNG FÜR BREMSSTAUBRÜCKHALTEANLAGEN**
FILTER ARRANGEMENT FOR BRAKE-DUST RETAINING SYSTEMS
ENSEMBLE DE FILTRE POUR SYSTÈMES D'ÉLIMINATION DE POUSSIÈRE DE FREIN

(30) Priorität: 27.10.2006 DE 202006016661 U
(43) Veröffentlichungstag der Anmeldung: 05.08.2009
(73) Patentinhaber: Mann + Hummel GmbH, 71638 Ludwigsburg (DE)
(72) Erfinder: JESSBERGER, Thomas, 71679 Asperg (DE); BÜHLER, Albrecht, 74336 Brackenheim (DE)
(86) Internationale Anmeldenummer: PCT/EP2007/061330
(87) Internationale Veröffentlichungsnummer: WO 2008/049829

(56) Entgegenhaltungen:
- US-A- 5 162 053

## Beschreibung

### Stand der Technik

Die Erfindung geht von einer Filteranordnung für Bremsstaubrückhalteanlagen, insbesondere für den Einsatz in Kraftfahrzeugen, mit den gattungsgemäßen Merkmalen des Hauptsanspruchs aus.

Es ist beispielsweise aus der DE 4240873 C 09.06.1994 bekannt, dass der durch den Verschleiß an den Bremsbelägen der Scheibenbremsen eines Kraftfahrzeuges entstehende Bremsstaub aufgefangen wird. Eine solche Vorrichtung ist vor allem deshalb sinnvoll, dass der oft umwelt- oder gesundheitsschädliche Bremsstaub nicht in die Umgebung gelangt oder sich insbesondere an den Felgen der Kraftfahrzeugräder festsetzt. Bei der bekannten Vorrichtung ist daher ein separates Sauggebläse vorgesehen, das den Bremsstaub über Saugleitungen zu einer dem Sauggebläse vorgeschalteten Filtereinrichtung führt und dann die gefilterte Luft in die Umgebung hinausbläst.

Darüber hinaus ist auch aus der DE 202005017472 U 08.06.2006 bekannt, dass bei einer Bremsstaubadsorptionsanlage die Saugkomponenten direkt an der Bremseinrichtung platziert werden und dann die gefilterte Abluft durch Luftkanäle entlassen wird. Für sich gesehen ist hieraus auch noch bekannt, dass eine Verknüpfung der Bremsstaubadsorptionsanlage mit anderen Komponenten eines Kraftfahrzeuges vorgenommen werden kann.

Des weiteren ist aus US 5162653 eine Filteranordnung bekannt, beider das Filterelement für die Filterung der Ansaugluft für den Verbrennungsmotor des Kraftfahrzeuges herangezogen wird und die mit dem Bremsstaub angereicherte Luft auf der Rohluftseite des Filterelements eingeschleust wird. Das Filterelement des Luftfilters im Ansaugtrakt des Verbrennungsmotors kann dabei den Bremsstaub in ähnlicher Weise aufnehmen wie die Staubpartikel in der Ansaugluft. Die Erfindung stellt eine Alternative zu der aus US 5162053 bekannten Filteranordung bereit.

### Darstellung der Erfindung

Die Erfindung betrifft eine Filteranordnung für Bremsstaubrückhalteanlagen an Bremseinrichtungen für Kraftfahrzeugräder mit einer Absaugvorrichtung an der jeweiligen Bremseinrichtung und mit einem Filterelement im Saugweg der mit dem Bremsstaub angereicherten Luft. Um eine einfache und kostengünstige Lösung auch hinsichtlich der Wartung der Filteranordnung zu erreichen, wird erfindungsgemäß in vorteilhafter Weise als Filterelement ein im Kraftfahrzeug bereits vorhandenes Filterelement, nämlich ein Abgasfilter oder ein Filter für die Innenraumbeliftungen, zur Bildung eines gemeinsamen einstückigen Filterelements herangezogen. Auch das Filterelement für die Herausfilterung des Bremsstaubes müsste ansonsten regelmäßig, zum Beispiel bei den Serviceintervallen des Kraftfahrzeuges, gewechselt werden. Dadurch würden dann zusätzliche Bauteil- und Servicekosten entstehen sowie ein zusätzlicher Handlingsaufwand. Außerdem müsste auch ein zusätzlicher Bauraum im Kraftfahrzeug zur Verfügung gestellt werden.

Um die Serviceintervalle bei dem zu erwartenden größeren Mengenanfall von Partikeln nicht zu erhöhen, kann auf einfache Weise eine Vergrößerung der Filterfläche bzw. des Filtervolumens vorgenommen werden, was auf jeden Fall günstiger und einfacher zu realisieren ist als

Vorteilhaft ist es auch, wenn das Filterelement für die Herausfilterung von Partikeln, insbesondere von Staubpartikel aus den Abgasen eines Dieselmotors, zur Brennstofffiltration herangezogen wird. Da bei diesen sogenannten Partikelfiltern die Filterkammern im laufenden Betrieb von Zeit zu Zeit mittels eines Abbrennprozesses gereinigt werden hat dies keinen Einfluss auf den Servicezyklus, da der Partikelfilter hierbei nicht gewartet werden muss. Die Filtergröße braucht hierbei ebenfalls nicht angepasst werden, da lediglich die Zeit zwischen den Abbrennvorgängen entsprechend angepasst werden muss. Durch das Abbrennen können darüber hinaus in besonders vorteilhafter Weise giftige und evtl. krebserregenden Stoffe im Bremsstaub, wie zum Beispiel Antimon, einfach verbrannt werden und müssen somit nicht durch Servicepersonal beim Filterwechsel entsorgt werden.

### Kurze Beschreibung der Figuren der Zeichnungen

Es zeigen:

Figur 1, in ähnlicher Weise aus US 5162053 bekannte, nicht erfindungsgemäße Filteranordnung mit einer Nutzung eines Filterelements für die Ansaugluft eines Verbrennungsmotors zusätzlich als Filterelement für eine Herausfilterung von Bremsstaub und

Figur 2 ein erfindungsgemäßes Ausführungsbeispiel einer Filteranordnung mit einer Nutzung eines Partikelfilters für die Abgase eines Verbrennungsmotors zusätzlich als Filterelement für die Herausfilterung von Bremsstaub. Weg(e) zur Ausführung der Erfindung

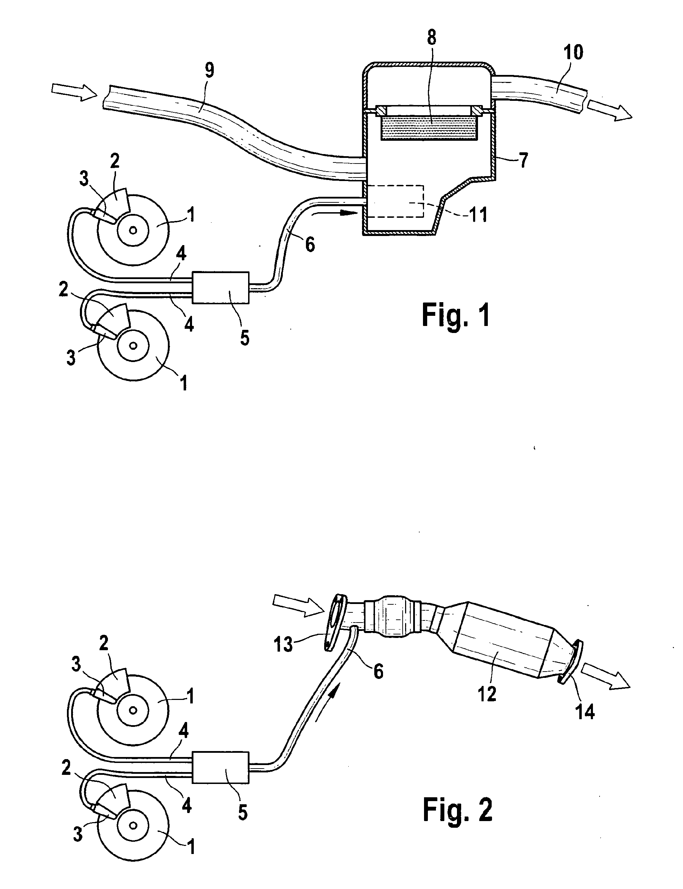

In Figur 1 sind für das Verständnis der Erfindung wesentliche Teile eines Kraftfahrzeuges dargestellt, wobei hier zwei Bremseinrichtungen mit jeweils einer Bremsscheibe 1 und Bremsbelägen 2 gezeigt sind, an die jeweils ein Saugstutzen 3 einer Bremsstaubrückhalteanlage geführt ist. Über Schläuche 4 sind die Saugstutzen 3 mit einem Gehäuse 5 verbunden, das hier vorzugsweise eine Saugvorrichtung zur Erzeugung des Saugstroms zur Absaugung des Bremsstaubes von den Bremsbelägen 2 bzw. den Bremsscheiben 1 enthält.

Über eine weitere Schlauch- oder Rohrverbindung 6 wird die Luft mit dem Bremsstaub in bekannter Weise in ein Luftfiltergehäuse 7 für ein Filterelement 8 transportiert. Diese Luft wird hier an der Rohluftseite des Luftfiltergehäuses 7 eingeführt an der auch der Ansaugstutzen 9 für die Ansaugung der Rohluft für einen hier nicht dargestellten Verbrennungsmotor angeschlossen ist. Beide Luftströme, die Ansaugluft und die Luft mit dem Bremsstaub, werden somit im Filterelement 8 im Luftfiltergehäuse 7 gefiltert und über einen weiteren Stutzen 10 dem Verbrennungsmotor zugeführt. Somit kann das bereits im Kraftfahrzeug vorhandene Filterelement zur Bildung des gemeinsamen einstückigen Filterelements 8 herangezogen werde, so dass bei den Serviceintervallen des Kraftfahrzeuges nur jeweils ein Filterelement 8 gewechselt werden muss.

Da das Luftfiltergehäuse 7 wegen der häufig gewünschten akustischen Dämpfungseigenschaften großvolumig ausfällt, kann das Filterelement 8 ohne Probleme größer ausgeführt werden und es besteht auch noch die Möglichkeit, dass die Saugvorrichtung, die zuvor als im Gehäuse 5 angeordnet beschrieben wurde, alternativ im Luftfiltergehäuse 7 angeordnet wird (hier gestrichelt mit dem Bezugszeichen 11 in der Figur 1 angedeutet).

In Figur 2 ist ein Ausführungsbeispiel der Erfindung gezeigt, bei dem ein Filterelement für die Herausfilterung von Partikeln, insbesondere ein Dieselpartikelfilter 12 zur Herausfilterung von Staubpartikel aus den Abgasen eines Dieselmotors, als Filterelement für die Herausfilterung des Bremsstaubes herangezogen wird. Gleich wirkende Bauteile sind hier mit den gleichen Bezugszeichen versehen; die Saugvorrichtung mit einem Elektromotor etc. befindet sich bei diesem Ausführungsbeispiel jedoch immer im Gehäuse 5.

Auch beim Ausführungsbeispiel nach der Figur 2 wird die Luft mit dem Bremsstaub an der Rohluftseite des Partikelfilters 12 in der Nähe eines Anschlussstutzen in der Abgasanlage in Richtung des Verbrennungsmotors möglichst rückwirkungsfrei angeschlossen und die gefilterte Luft wird über einen Stutzten 14 dem Auslass der Abgasanlage zugeführt.

## Patentansprüche

1. Filteranordnung für Bremsstaubrückhalteanlagen an Bremseinrichtungen für Kraftfahrzeugräder, mit einer Absaugvorrichtung an der jeweiligen Bremseinrichtung und mit einem Filterelement im Saugweg der mit dem Bremsstaub angereicherten Luft, **wobei** als Filterelement ein im Kraftfahrzeug bereits vorhandenes Filterelement (8; 12) herangezogen ist, **dadurch gekennzeichnet, dass** das Filterelement für die Herausfilterung von Partikeln aus den Abgasen eines Verbrennungsmotors des Kraftfahrzeuges oder für die Innenraumbelüftung des Kraftfahrzeuges herangezogen ist und die mit dem Bremsstaub angereicherte Luft auf der Rohluftseite des Filterelements einschleusbar ist.

2. Filteranordnung nach Anspruch 1, **dadurch gekennzeichnet, dass** als Filterelement der Partikelfilter (12) für die Abgase eines Dieselmotors des Kraftfahrzeuges herangezogen ist.

3. Filteranordnung nach Anspruch 2, **dadurch gekennzeichnet, dass** das gemeinsame Filterelement für die Herausfilterung von Partikeln aus den Abgasen des Verbrennungsmotor des Kraftfahrzeuges und die mit dem Bremsstaub angereicherte Luft mittels eines in vorgegebenen Intervallen durchgeführten Reinigungs- oder Abrennprozesses regenerierbar ist.

## Claims

1. Filter arrangement for brake dust retaining system in brake assemblies for motor vehicle wheels, with an exhaust device at the respective brake assembly and with a filter element in the intake duct of the air loaded with brake dust, a filter element (8; 12) already existing in the motor vehicle being used as filter element, **characterized in that** the filter element is used either for filtering particles from the exhaust gases of an internal combustion engine of the motor vehicle or for the interior ventilation of the motor vehicle, and that the air loaded with brake dust can be introduced at the dirty air side of the filter element.

2. Filter arrangement according to claim 1, **characterized in that** the particle filter (12) for the exhaust gases of a diesel engine of the motor vehicle is used as filter element.

3. Filter arrangement according to claim 2, **characterized in that** the common filter element for filtering particles from the exhaust gases of the internal combustion engine of the motor vehicle and the air loaded with brake dust can be regenerated by means of a cleaning and burn-off process in defined intervals.

## Revendications

1. Système de filtre pour des installations de retenue de la poussière de freinage sur des dispositifs de freinage pour roues de véhicules, avec un dispositif d'aspiration sur le dispositif de freinage concerné et avec un élément filtrant sur la voie d'aspiration de l'air enrichi en poussière de freinage, un élément filtrant (8 ; 12) déjà présent dans le véhicule étant utilisé comme élément filtrant, **caractérisé en ce que** l'élément filtrant est utilisé pour filtrer des particules depuis les gaz d'échappement d'un moteur à combustion interne du véhicule automobile ou pour la ventilation de l'habitacle intérieur du véhicule et que l'air enrichi en poussière de freinage peut être introduit du côté de l'air brut de l'élément filtrant.

2. Système de filtre selon la revendication 1, **caractérisé en ce que**, comme élément filtrant, on utilise le filtre à particules (12) destiné aux gaz d'échappement d'un moteur diesel du véhicule automobile.

3. Système de filtre selon la revendication 2, **caractérisé en ce que** l'élément filtrant commun destiné à filtrer des particules depuis les gaz d'échappement du moteur à combustion interne du véhicule et l'air enrichi en poussière de freinage peut être régénéré au moyen d'un processus de nettoyage et de combustion conduit à intervalle prédéterminé.
